# EUROPÄISCHE PATENTSCHRIFT

(11) **EP 1 147 702 B1**
(45) Veröffentlichungstag und Bekanntmachung des Hinweises auf die Patenterteilung: **22.09.2004**
(21) Anmeldenummer: 01107233.7
(22) Anmeldetag: 23.03.2001
(51) Int. Cl.: A01F 12/10, A01F 7/06

(54) **Selbstfahrender Mähdrescher**
Self-propelled combine
Moissonneuse-batteuse automotrice

(30) Priorität: 19.04.2000 DE 10019640
(43) Veröffentlichungstag der Anmeldung: 24.10.2001
(73) Patentinhaber: CLAAS Selbstfahrende Erntemaschinen GmbH, 33428 Harsewinkel (DE)
(72) Erfinder: Schwersmann, Berthold, 49186 Dülmen (DE)

(56) Entgegenhaltungen:
- EP-A- 0 230 276
- EP-A- 1 078 568
- WO-A-97/07660
- DE-A- 19 722 079

## Beschreibung

Die Erfindung betrifft einen selbstfahrenden Mähdrescher mit einem Erntevorsatz und einem diesem nachgeordneten Schrägförderer, von dem aus das Erntegut unter Zwischenschaltung einer im Tangentialfluss arbeitenden Drescheinheit oder direkt in zwei Teilströme aufgeteilt, eine im Axialfluss arbeitenden Dresch- und/oder Trenneinrichtung durchläuft, die aus zwei mit Abstand zueinander angeordneten, mit Leitschienen besetzten Dresch- und/oder Trenngehäusen und darin antreibbar gelagerten Dresch- und/oderTrennrotoren besteht, wobei letztere mit Förderelementen besetzt sind.

Im Nachfolgenden ist der Erfindungsgegenstand der Einfachheit halber entsprechend der zeichnerischen Darstellung mit einem zwischengeschaltetem beziehungsweise vorgeordnetem-Tangential-Dreschwerk beschrieben.

Bei Mähdreschern dieser bekannten Bauart (siehe beispielsweise die DE 36 01 359 C2, DE 20 00 605 A1)) ist der größtmögliche Durchmesser der Trenngehäuse beschränkt, beispielsweise durch den bauartbedingten, insgesamt zur Verfügung stehenden Bauraum und/oder wegen bestehender Auflagen, beispielsweise vorgeschriebener Bahntransportprofile ect, wobei insbesondere die vertikalen und horizontalen Raummaße für eine Erntemaschine nicht überschritten werden dürfen.. Diese Einschränkungen führen dazu, dass die Trenngehäuse einen Abstand sowohl voneinander als auch einen Seitenabstand zur seitlichen Begrenzung der Maschinenkarosserie aufweisen. Um das Gut dennoch vom Tangentialdreschwerk aus den beiden Trenngehäusen zuführen zu können, ist diesem eine mit Führungselementen versehene Übergabetrommel vorgeordnet, durch die der vom Tangentialdreschwerk ausgestoßene Gutstrom zusammengeführt und aufgeteilt wird.

Es hat sich aber in der Praxis erwiesen, dass bei neueren mehr und mehr durchsatzgesteigerten Mähdreschern die Übergabe des Gutes bzw. die Annahme durch die Trennrotoren nicht unter allen Erntebedingungen funktioniert. Diese nicht zufriedenstellende Funktion ist darauf zurückzuführen, dass der Gutstrom unmittelbar vor dem Eintritt in die beiden Trenngehäuse sowohl im mittleren Bereich als auch in den beiden Seitenbereichen einer abrupten Richtungsänderung unterworfen werden muss.

Der vorliegenden Erfindung liegt daher die Aufgabe zugrunde, einen eingangs näher bezeichneten Mähdrescher so auszugestalten, dass er die an ihn zu stellenden Anforderungen mit Hinblick auf eine einwandfreie Übergabe des Gutstromes von einem Tangentialdreschwerk an eine Axialtrenneinrichtung mit zwei parallel zueinander verlaufenden Trenngehäusen in zufriedenstellender Art und Weise erfüllt.

Dieses wird erreicht, indem die beiden Trenngehäuse sich zum Guteingangsbereich hin, bezogen aufdie Rotationsachse der Trennrotoren sowohl vertikal als auch horizontal asymmetrisch erweitern und beiden Gehäusen ein gemeinsamer vorderer Trennkeil zugeordnet ist. Auf diese Weise wird zum einen erreicht, dass das Gut ausgehend von der Übergabetrommel keiner abrupten Richtungsänderung mehr unterworfen wird und zum anderen wird erreicht, dass durch die asymmetrische Aufweitung der Gehäuse das Gut den beiden Trennrotoren am Umfang verteilt gleichmäßig zugeführt wird.

Weitere vorteilhafte Ausbildungen sind in den Unteransprüchen näher definiert.

Im folgenden soll ein Ausführungsbeispiel der Erfindungen anhand mehrerer Zeichnungen näher erläutert werden. Dabei zeigt:
- Figur 1: einen Mähdrescher in teilweiser Seitenansicht und Schnittdarstellung
- Figur 2: die Übergabe- und Trenngehäuse in perspektivischer Darstellung;
- Figur 3: die in Figur 1 dargestellten Übergabegehäuse in der Draufsicht
- Figur 4: die in Figur 1 dargestellten Übergabegehäuse in Vorderansicht.
- Figur 5: das Übergabe- und Trenngehäuse 15 in der Seitenansicht nach einem Schnitt nach der Linie V - V der Figur 3

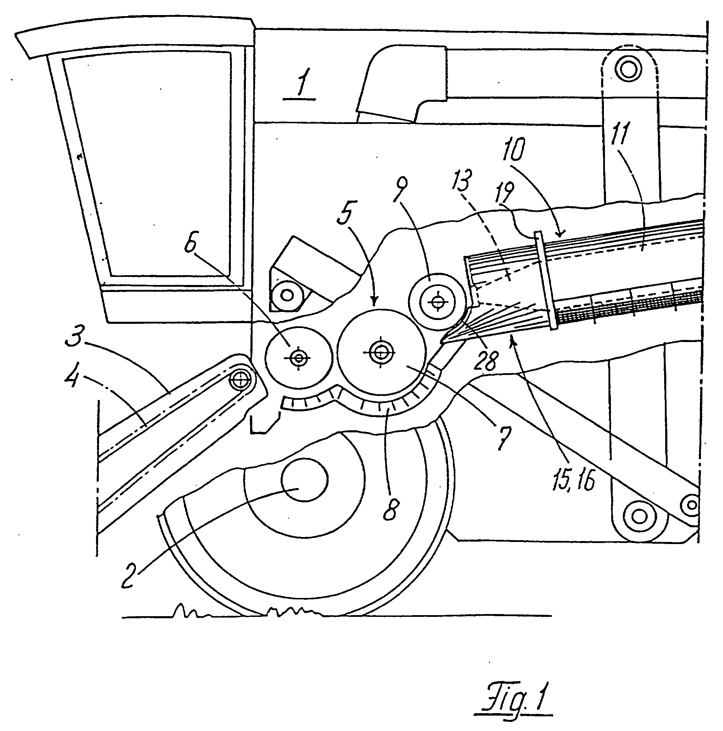

In der Figur 1 sind die wesentlichen Elemente eines Mähdreschers dargestellt. Dabei ist mit 1 das Dreschergehäuse beziffert, an dem frontseitig, in Nähe der Hauptfahrachse 2 ein Förderkanal 3-mit einem Kettenförderer 4 gelenkig angeschlossen ist. Über diesen Förderkanal 3 gelangt das Erntegut in eine sogenannte Tangential-Drescheinrichtung 5. Im wesentlichen besteht diese Einrichtung 5 aus einer Vortrommel 6, der Hauptdreschtrommel 7 und dem Dreschkorb 8 , der die Trommeln 6 und 7 unterschlächtig, bereichsweise umgreift. Oberhalb des abgabeseitigen Endes des Dreschkorbes 8 ist achsparallel zu den Trommeln 6 und 7 eine Einlegetrommel 9 angeordnet, deren Aufgabe es ist, das Erntegutgemisch aus Korn, Stroh und Spreuanteilen einer Trenneinrichtung 10 stirnseitig zuzuführen.

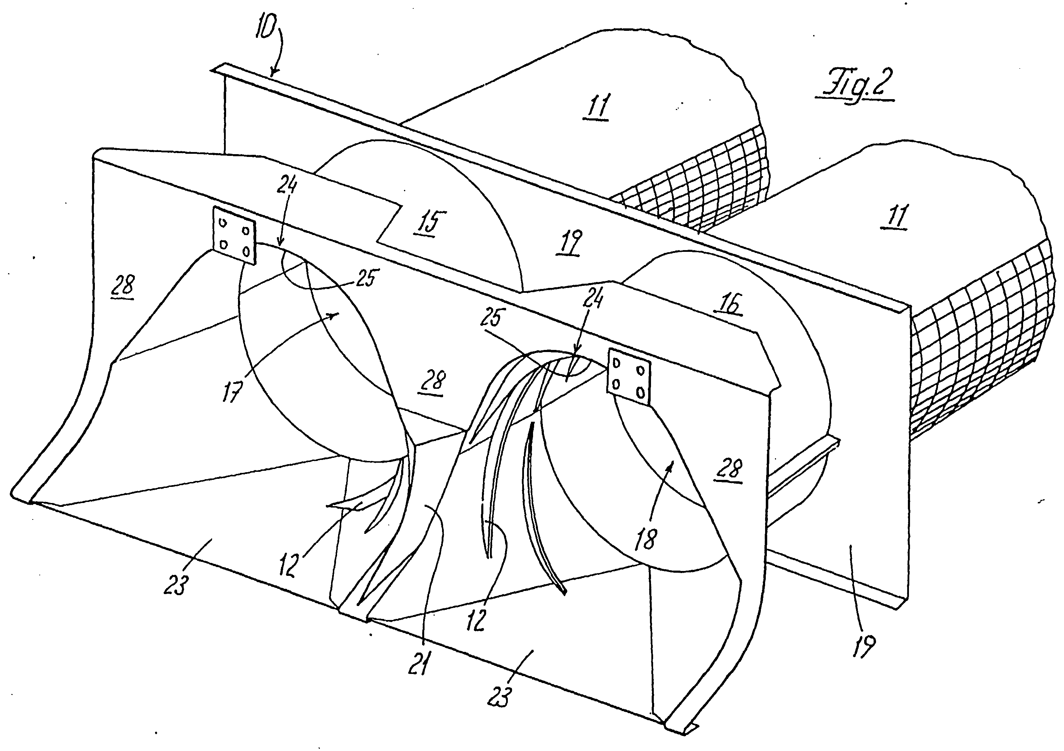

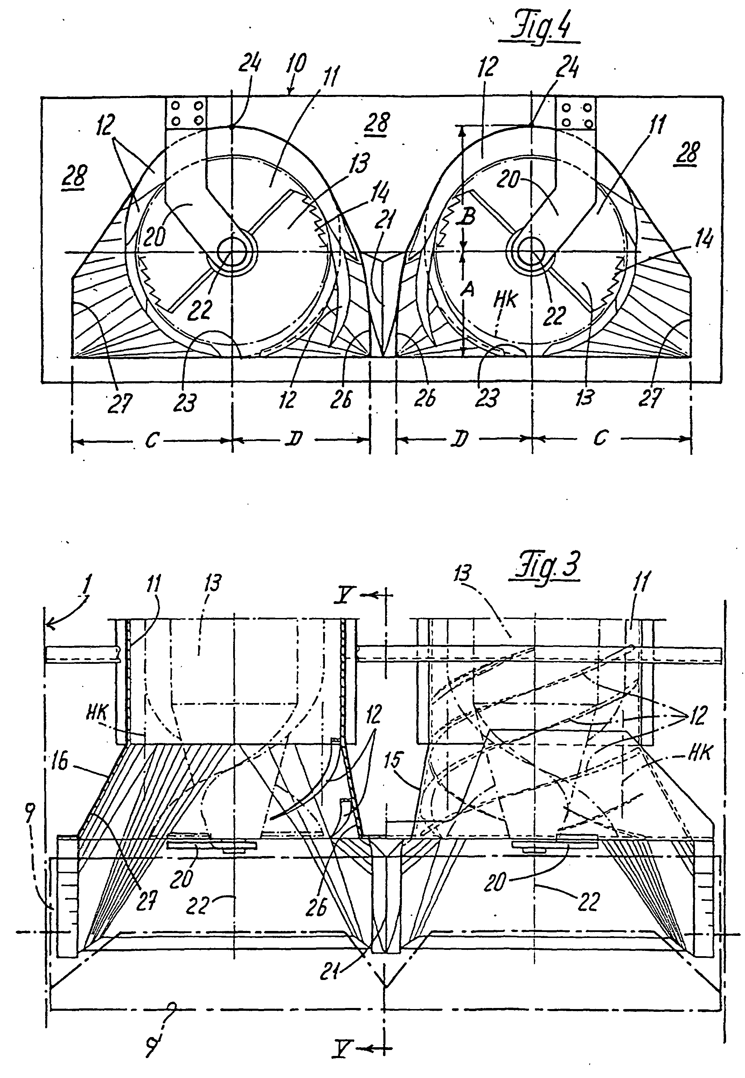

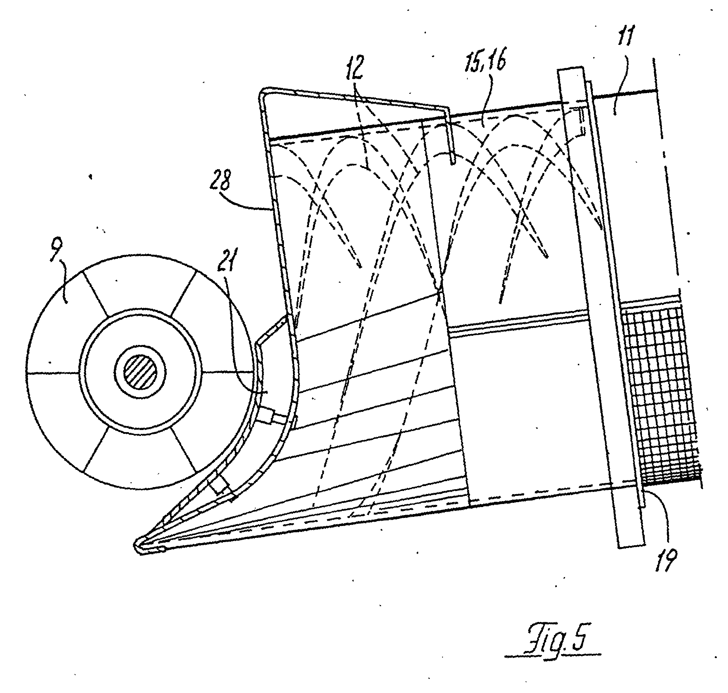

Die Trenneinrichtung 10 besteht aus zwei zylindrischen Trenngehäusen 11, die an ihren inneren Wandungen bereichsweise mit leistenartigen Leitelementen 12 bestückt sind. In diesen Trenngehäusen 11 sind koaxial Trennrotoren 13 gelagert, die mit ihren aufgesetzten Förderelementen 14 einen durchgehenden zylindrischen Flugkreis beschreiben. Wie insbesondere aus der Figur 1 hervorgeht, schließen sich an die vorderen Enden der Trenngehäuse 11 zwei Übergangsgehäuse 15 und 16 an. Die beiden Übergangsgehäuse 15 und 16 sind in ihrem hinteren Bereich durch ein, zwei Durchtrittsöffnungen 17 und 18 aufweisendes Blech 19 miteinander verbunden. Ebenso sind die vorderen Einführbereiche der Übergangsgehäuse 15 und 16 miteinander verbunden und zwar durch ein schaufelförmig gebogenes Frontblech 28. Aus der Figur 2 ist zu erkennen, daß sich die mit Förderelementen 14 besetzten Trennrotoren 13 bis in den vorderen Bereich der Trenngehäuse bzw. Übergabegehäuse 11, 15 und 16 erstrecken und dort über Stützen 20 mit dem Frontblech 28 verbunden sind. Dieses Frontblech 28 weist in seinem mittleren Bereich einen Trennkeil 21 auf, dessen Keilwinkel sich von unten nach oben verlaufend vergrößert.

Aus den Zeichnungsfiguren 2,3 und 4 ist zu erkennen, daß sich die beiden Übergabegehäuse 15 und 16 zu ihrem Aufnahmeende hin asymmetrisch aufweiten und zwar derart, dass der Abstand A einer jeden Rotationsachse 22 zum Boden 23 hin kleiner ist als der Abstand B der Rotationsachsen 22 zum höchsten Punkt 24 der oberen Abdeckung 25 der Übergabegehäuse 15 und 16.. Desweiteren ist der seitliche Abstand D der Rotationsachsen 22 zur den inneren Raumbegrenzungen 26 kleiner als der Abstand C der Rotationsachsen 22 von den äußeren Raumbegrenzungen 27.

Zu erwähnen bleibt noch, dass sich das Frontblech 28 über die gesamte Länge der Einlegetrommel 9 erstreckt.

### Bezugszeichenliste

- 1: Dreschergehäuse
- 2: Hauptfahrachse
- 3: Förderkanal
- 4.: Kettenförderer
- 5.: Drescheinrichtung
- 6.: Vortrommel
- 7.: Hauptdreschtrommel
- 8.: Dreschkorb
- 9.: Einlegetrommel
- 10.: Trenneinrichtung
- 11.: Trenngehäuse
- 12.: Leitelemente
- 13: Trennrotoren
- 14.: Förderelemente
- 15: Übergabegehäuse
- 16: Übergabegehäuse
- 17: Durchtrittsöffnungen
- 18: Durchtrittsöffnungen
- 19: Blech
- 20.: Stützen
- 21.: Trennkeil
- 22.: Rotationsachsen
- 23.: Boden
- 24.: Punkt
- 25.: Abdeckung
- 26.: Raumbegrenzung
- 27.: Raumbegrenzung
- 28: Frontblech
- A bis D: Abstände
- HK: Hüllkreis

## Patentansprüche

1. Selbstfahrender Mähdrescher mit einem Erntevorsatz und einem diesem nachgeordneten Schrägförderer, von dem aus das Erntegut unter Zwischenschaltung einer im Tangentialfluss arbeitenden Drescheinheit oder direkt in zwei Teilströme aufgeteilt, eine im Axialfluss arbeitenden Dreschund/oder Trenneinrichtung durchläuft, die aus zwei mit Abstand zueinander angeordneten, mit Leitschienen besetzten Dresch- und/oder Trenngehäusen und darin antreibbar gelagerten Dresch- und/oderTrennrotoren besteht, wobei letztere mit Förderelementen besetzt sind,
**dadurch gekennzeichnet,**
**dass** sich jedes der Trenngehäuse (11) zu seinem Guteinlaufende hin, bezogen auf die Rotationsachse (22) des zugehörigen Trennrotors (13) sowohl vertikal als auch horizontal unsymmetrisch erweitert.

2. Selbstfahrender Mähdrescher mit einem Erntevorsatz und einem diesem nachgeordneten Schrägförderer, von dem aus das Erntegut unter Zwischenschaltung einer im Tangentialfluss arbeitenden Drescheinheit oder direkt in zwei Teilströme aufgeteilt, eine im Axialfluss arbeitenden Dreschund/oder Trenneinrichtung durchläuft, die aus zwei mit Abstand zueinander angeordneten, mit Leitschienen besetzten Dresch- und/oder Trenngehäusen und darin antreibbar gelagerten Dresch- und/oderTrennrotoren besteht, wobei letztere mit Förderelementen besetzt sind,
**dadurch gekennzeichnet,**
**dass** die Trenneinheit (10) aus zwei achsparallelen Trenngehäusen (11) mit vorgeordneten Übergabegehäusen (15, 16) besteht, die sich zum Guteingangsbereich hin bezogen auf die Rotationsachse (22) der Trennrotoren (13) sowohl vertikal als auch horizontal unsymmetrisch erweitern und beiden Gehäusen (15,16) ein gemeinsamer vorderer Trennkeil 21 zugeordnet ist.

3. Selbstfahrender Mähdrescher nach Anspruch 1 und 2,
**dadurch gekennzeichnet,**
**dass** der von den Förderelementen (14) beschriebene Hüllkreis (HK) der Trennrotoren (13) über die gesamte Länge der Trennrotoren (13) gleichbleibend zylindrisch ist.

4. Selbstfahrender Mähdrescher nach den Ansprüchen 1 bis 3,
**dadurch gekennzeichnet,**
**dass** die Rotationsachse (22) eines jeden Trennrotors (13) im Guteingangsbereich der Trenneinrichtung (10) einen geringeren Abstand (A) zum Boden (23) eines Gehäuses (11,15,16) aufweist, als zum höchsten Punkt seiner oberen Abdeckung (25) Abstand B.

5. Selbstfahrender Mähdrescher nach den Ansprüchen 1 bis 4,
**dadurch gekennzeichnet,**
**dass** der Abstand der vertikalen Mittelebene eines jeden Trennrotors (13) im Bodenbereich (23) des zugehörigen Gehäuses (11,15, 16) nach außen hin (Abstand C) größer ist als nach innen (Abstand D).

6. Selbstfahrender Mähdrescher nach den Ansprüchen 1 bis 4,
**dadurch gekennzeichnet,**
**dass** der Abstand der vertikalen Mittelebene eines jeden Trennrotors (13) im Bodenbereich (23) des zugehörigen Gehäuses (11, 15, 16) nach außen hin (Abstand C) kleiner ist als nach innen (Abstand D)

7. Selbstfahrender Mähdrescher nach den Ansprüchen 1 bis 6,
**dadurch gekennzeichnet,**
**dass** sich die vertikale Erweiterung (Abstand B)der Trenngehäuse (11) sich gleichbleibend über die gesamte Länge der Trenngehäuse (11) erstreckt.

8. Selbstfahrender Mähdrescher nach den Ansprüchen 1 bis 7,
**dadurch gekennzeichnet,**
**dass** die Gehäuse (11,15, 16) im Guteingangsbereich durch ein gemeinsames mit zwei Durchtrittsöffnungen versehenes schaufelförmig gebogenes und dem Durchmesser der Übergabetrommel (9) angepaßtes Frontblech 28 miteinander verbunden sind.

9. Selbstfahrender Mähdrescher nach den Ansprüchen 2 bis 6,
**dadurch gekennzeichnet,**
**dass** beide Übergabegehäuse (15, 16) zumindest bereichsweise an ihren Innenwandungen mit Leitelementen (12) besetzt sind.

10. Selbstfahrender Mähdrescher nach den Ansprüchen 1 bis 7,
**dadurch gekennzeichnet, dass** das Frontblech (19) im mittigen Bereich mit einem Guttrennkeil (21) besetzt ist, dessen Keilwinkel sich von unten nach oben hin vergrößert.

## Claims

1. A self-propelled combine harvester comprising a front-mounted harvesting unit and an inclined conveyor which is arranged downstream thereof and from which the crop material is divided into two partial flows directly or with the interposition of a threshing unit operating in the tangential flow mode, and passes through a threshing and/or separating device which operates in the axial flow mode and which comprises two mutually spaced threshing and/or separating housings fitted with guide rails, and threshing and/or separating rotors mounted drivably in the threshing and/or separating housings, wherein the rotors are fitted with conveyor elements,
**characterised in that**
each of the separating housings (11) enlarges asymmetrically both vertically and
also horizontally towards its material intake end with respect to the axis of rotation (22) of the associated separating rotor (13).

2. A self-propelled combine harvester comprising a front-mounted harvesting unit and an inclined conveyor which is arranged downstream thereof and from which the crop material is divided into two partial flows directly or with the interposition of a threshing unit operating in the tangential flow mode, and passes through a threshing and/or separating device which operates in the axial flow mode and which comprises two mutually spaced threshing and/or separating housings fitted with guide rails, and threshing and/or separating rotors mounted drivably in the threshing and/or separating housings, wherein the rotors are fitted with conveyor elements,
**characterised in that**
the separating unit (10) comprises two parallel-axis separating housings (11) with upstream-disposed transfer housings (15, 16) which enlarge asymmetrically both vertically and also horizontally towards its material intake end with respect to the axis of rotation (22) of the separating rotors (13) and a common front separating wedge (21) is associated with both housings (15, 16).

3. A self-propelled combine harvester according to claim 1 or claim 2 **characterised in that** the envelope circle (HK) of the separating rotors (13), which circle is described by the conveyor elements (14), is uniformly cylindrical over the entire length of the separating rotors (13).

4. A self-propelled combine harvester according to claims 1 to 3 **characterised in that** the axis of rotation (22) of each separating rotor (13) in the material intake region of the separating device (10) is at a smaller spacing (A) relative to the bottom (23) of a housing (11, 15, 16) than to the highest point of its upper cover (25), spacing B.

5. A self-propelled combine harvester according to claims 1 to 4 **characterised in that** the spacing of the vertical central plane of each separating rotor (13) in the bottom region (23) of the associated housing (11, 15, 16) is greater outwardly (spacing C) than inwardly (spacing D).

6. A self-propelled combine harvester according to claims 1 to 4 **characterised in that** the spacing of the vertical central plane of each separating rotor (13) in the bottom region (23) of the associated housing (11, 15, 16) is smaller outwardly (spacing C) than inwardly (spacing D).

7. A self-propelled combine harvester according to claims 1 to 6 **characterised in that** the vertical enlargement (spacing B) of the separating housings (11) extends uniformly over the entire length of the separating housings (11).

8. A self-propelled combine harvester according to claims 1 to 7 **characterised in that** in the material intake region the housings (11, 15, 16) are connected together by a common front plate 28 which is provided with two through openings and which is curved in a shovel configuration and which is adapted to the diameter of the transfer drum (9).

9. A self-propelled combine harvester according to claims 2 to 6 **characterised in that** both transfer housings (15, 16) are provided at least in a region-wise manner at their inside walls with guide elements (12).

10. A self-propelled combine harvester according to claims 1 to 7 **characterised in that** in the central region the front panel (19) is provided with a material separating wedge (21), the wedge angle of which increases in an upward direction.

## Revendications

1. Moissonneuse-batteuse automotrice comportant un outil frontal de récolte et, placé derrière celui-ci, un convoyeur à la sortie duquel le produit de récolte est divisé en deux flux partiels, de manière directe ou après passage dans une unité de battage à flux tangentiel, traverse un dispositif de battage et/ou de séparation à flux axial qui est formé de deux carters de battage et/ou de séparation espacés l'un de l'autre, avec des barrettes de guidage et des rotors de battage et/ou de séparation entraînés montés dans ceux-ci, ces derniers étant équipés d'éléments de transport, **caractérisé par le fait que** chaque carter de séparation (11), en direction de son extrémité d'entrée de produit, s'élargit de manière non symétrique dans la direction verticale et la direction horizontale par rapport à l'axe de rotation (22) du rotor de séparation (13) concerné.

2. Moissonneuse-batteuse automotrice comportant un outil frontal de récolte et, placé derrière celui-ci, un convoyeur à la sortie duquel le produit de récolte est divisé en deux flux partiels, de manière directe ou après passage dans une unité de battage à flux tangentiel, traverse un dispositif de battage et/ou de séparation à flux axial qui est formé de deux carters de battage et/ou de séparation espacés l'un de l'autre, avec des barrettes de guidage et des rotors de battage et/ou de séparation entraînés montés dans ceux-ci, ces derniers étant équipés d'éléments de transport, **caractérisé par le fait que** l'unité de séparation (10) est formée de deux carters de séparation (11) dont les axes sont mutuellement parallèles, en amont desquels sont disposés des carters de transfert (15, 16) qui, en direction de l'extrémité d'entrée de produit, s'élargissent de manière non symétrique dans la direction verticale et la direction horizontale par rapport à l'axe de rotation (22) des rotors de séparation (13), et **par.le fait qu'**un bec-séparateur (21) antérieur commun est associé aux deux carters (15, 16).

3. Moissonneuse-batteuse automotrice selon revendications 1 et 2, **caractérisé par le fait que** le cercle enveloppe (HK) des rotors de séparation (13) décrit par les éléments de transport (14) est cylindrique et constant sur toute la longueur des rotors de séparation (13).

4. Moissonneuse-batteuse automotrice selon revendications 1 à 3, **caractérisé par le fait que** l'axe de rotation (22) de chaque rotor de séparation (13) dans la région d'entrée de produit du dispositif de séparation (10) présente une distance (A) par rapport au fond (23) d'un carter (11, 15, 16) plus faible que par rapport au point le plus élevé de son capot supérieur, distance (B).

5. Moissonneuse-batteuse automotrice selon revendications 1 à 4, **caractérisé par le fait que** la distance du plan médian vertical de chaque rotor de séparation (13) dans la région du fond (23) du carter (11, 15, 16) concerné est plus grande en direction de l'extérieur (distance C) qu'en direction de l'intérieur (distance D).

6. Moissonneuse-batteuse automotrice selon revendications 1 à 4, **caractérisé par le fait que** la distance du plan médian vertical de chaque rotor de séparation (13) dans la région du fond (23) du carter (11, 15, 16) concerné est plus petite en direction de l'extérieur (distance C) qu'en direction de l'intérieur (distance D).

7. Moissonneuse-batteuse automotrice selon revendications 1 à 6, **caractérisé par le fait que** l'élargissement vertical (distance B) des carters de séparation (11) s'étend de manière constante sur toute la longueur des carters de séparation (11).

8. Moissonneuse-batteuse automotrice selon revendications 1 à 7, **caractérisé par le fait que** les carters (11, 15, 16) dans la zone d'entrée de produit sont reliés entre eux par une tôle frontale (28) qui est pourvue de deux orifices de passage, est cintrée et est adaptée au diamètre du tambour de transfert (9).

9. Moissonneuse-batteuse automotrice selon revendications 2 à 6, **caractérisé par le fait que** les deux carters de transfert (15, 16), au moins localement, portent des éléments de guidage (12) sur leurs parois intérieures.

10. Moissonneuse-batteuse automotrice selon revendications 1 à 7, **caractérisé par le fait que** la tôle frontale (19) dans la région médiane est pourvue d'un bec-séparateur de produit (21), dont l'angle de coin augmente du bas vers le haut.
